# EUROPÄISCHE PATENTSCHRIFT

(11) **EP 1 978 583 B1**
(45) Veröffentlichungstag und Bekanntmachung des Hinweises auf die Patenterteilung: **21.10.2009**
(21) Anmeldenummer: 07007509.8
(22) Anmeldetag: 12.04.2007
(51) Int. Cl.: H01M 8/02

(54) **Metallische Bipolarplatte mit nanostrukturierter Beschichtung aus ternärer Keramik für eine Brennstoffzelle**
Metallic bipolar plate with nanostructured coating of ternary ceramic material for fuel cell
Plaque bipolaire métallique ayant un revêtement nanostructuré de céramique ternaire pour pile à combustible

(30) Priorität: 30.03.2007 DE 102007015811
(43) Veröffentlichungstag der Anmeldung: 08.10.2008
(73) Patentinhaber: Universität Duisburg-Essen, 45141 Essen (DE)
(72) Erfinder: Buck, Volker Prof. Dr., 42555 Velbert (DE); Heinzel, Angelika Prof. Dr., 47058 Duisburg (DE)
(74) Vertreter: Gesthuysen, von Rohr & Eggert

(56) Entgegenhaltungen:
- US-A1- 2005 118 482
- US-A1- 2006 110 648
- BIN ET AL.: "Study on the electrical and mechanical properties of polyvinylidene fluoride/titanium silicon carbide composite bipolar plates" JOURNAL OF POWER SOURCES, Bd. 161, Nr. 2, 27. Juni 2006 (2006-06-27), Seiten 997-1001, XP002487930 www.sciencedirect.com
- JOVIC ET AL.: "Corrosion behavior of select MAX phases in NaOH, HCl and H2SO4" CORROSION SCIENCE, Bd. 48, Nr. 12, 22. Juni 2006 (2006-06-22), Seiten 4274-4282, XP002487926 sciencedirect.com
- BARSOUM MICHAEL W ET AL: "The MaxPhase: Unique New Carbide and Nitride Materials" AMERICAN SCIENTIST, NEW HAVEN, CT, US, Bd. 89, 1. August 2001 (2001-08-01), Seiten 334-343, XP008090225 ISSN: 0003-0996

## Beschreibung

Die vorliegende Erfindung betrifft eine metallische Bipolarplatte für eine Brennstoffzelle gemäß dem Oberbegriff des Anspruchs 1 sowie ein Verfahren zum Herstellen einer metallischen Bipolarplatte gemäß dem Oberbegriff des Anspruchs 6.

Brennstoffzellenanordnungen bestehen in der Regel aus einer Vielzahl in Serie geschalteter einzelner Brennstoffzellen. Die elektrische Kontaktierung von Anode und Kathode benachbarter Brennstoffzellen erfolgt jeweils über eine sogenannte Bipolarplatte. Weiter erfolgen üblicherweise die Zufuhr der Reaktionsgase und die Abfuhr der Reaktionsprodukte über eine strukturierte Oberfläche der Bipolarplatte. Teilweise wird die Bipolarplatte auch als Zellrahmen bezeichnet.

Die Bipolarplatte muß verschiedenste Auforderungen erfüllen. Wichtig sind ein geringer elektrischer Widerstand und eine hohe Korrosionsbeständigkeit. Um eine technisch verwendbare Spannung zu erreichen, werden die Brennstoffzellen "gestapelt", also Brennstoffzellenstapel gebildet bzw. die Einzelzellen in Serie geschaltet. Dadurch addieren sich alle Widerstände der Einzelzellen und tragen zu ohmschen Verlusten des Brennstoffzellenstapels unter Stomfluß bei. Dementsprechend wichtig ist es also, die elektrischen Widerstände der Brennstoffzellen zu minimieren. Dementsprechend müssen die eingesetzten Materialien zumindest gut elektrisch leitend sein. Vorzugsweise werden graphitische oder metallische Materialien eingesetzt.

Bipolarplatten aus Metall haben aus Ausfertigungs- und Kostengründen prinzipiell Vorteile. Bei Metallen ist außer den elektrischen Widerständen jedoch die Korrosionsproblematik im Brennstoffzellenbetrieb zu beachten. Auf der einen Seite der Biopolarplatte herrschen reduzierende Bedingungen, auf der anderen Seite herrschen oxidierende Bedingungen. Weiter treten Potentiale bis zu 1,2 Volt auf. Reines Wasser als Produkt der Brennstoffzellenreaktion ist auch für Edelstähle problematisch, insbesondere bei den üblicherweise erhöhten Betriebstemperaturen.

Aufgrund der vorgenannten Anforderungen können metallische Bipolarblatten mit einer Beschichtung versehen werden, um die Ziele (geringer Widerstand, hohe Korrosionsstabilität) bei geringen Kosten erreichen zu können.

Ein weiterer Aspekt ist die Fertigungstechnik. Metallische Bipolarplatten werden durch Umformung von Blechen hergestellt. Bisher muß die Umformung zur Bildung der gewünschten strukturierten Oberflächen (insbesondere zur Gasführung in der Brennstoffzelle) vor der anschließenden Beschichtung erfolgen, da heutige Beschichtungen derartige Umformvorgänge nicht unbeschadet überstehen.

Die WO 01/78175 A1 offenbart eine metallische Bipolarplatte mit einer niederohmigen Beschichtung. Die Beschichtung ist zumindest im Bereich ihrer kontaktierenden Außenoberfläche mehrphasig ausgebildet, wobei die Beschichtung eine metallische Phase und eine Verbindungsphase aufweist.

Die WO 2004/049485 A1 offenbart eine metallische Bipolarplatte mit einer metallischen Beschichtung, wobei metallische Pulverpartikel mit hoher Geschwindigkeit in eine Grenzregion des Metallmaterials der Bipolarplatte zur metallurgischen Verbindung mit der Beschichtung eingebracht werden.

Die US 2006/110648 A1 offenbart eine metallische Bipolarplatte mit einer Beschichtung aus TₓAl_{y}N, wobei x = 0,5 bis 0,75 und y = 0,25 bis 0,5 ist.

Die US 2005/118482 A1 betrifft eine metallische Bipolarplatte für eine Festoxydbrennstoffzelle, die eine Beschichtung aus Titanaluminiumnitrid bzw. Titansiliziumcarbid enthält.

Die Veröffentlichung Bin et al. offenbart eine Biopolarplatte aus einem nichtmetallischen Verbundmaterial, das ein Polymer als Binder und Ti₃SiC₂ als korrosionsresistentes, elektrisch leitfähiges Füllmaterial aufweist.

Die aus dem Stand der Technik bekannten metallischen Bipolarplatten weisen keine optimalen Eigenschaften (geringer Widerstand und/oder hohe Korrosionsbeständigkeit) auf, sind in der Herstellung aufwendig und/oder sind teuer.

Ternäre Keramiken und neue Carbid- und Nitrid-Materialien sind beispielsweise aus dem Artikel "The MAX Phases: Unique New Carbide and Nitride Materials" von Michael W. Barsoum et. al., erschienen in "American Scientist", Volume 89, 2001, Seiten 334 bis 343, bekannt. Die Verwendung dieser Materialien wurde bisher nur im wesentlichen für den Maschinenbau und elektrische Kontakte insbesondere zur Minimierung des Abriebs in Erwägung gezogen, jedoch nicht für Bipolarplatten bei Brennstoffzellen, auch wenn verschiedene herausragende Eigenschaften dieser Materialien, wie hohe Oxidationsbeständigkeit, geringer Kontaktwiderstand oder dergleichen, bereits bekannt sind.

Aufgabe der vorliegenden Erfindung ist es, eine metallische Bipolarplatte und ein Verfahren zu deren Herstellung anzugeben, wobei die gewünschten Eigenschaften, insbesondere sowohl ein geringer elektrischer Widerstand als auch eine hohe Korrosionsbeständigkeit, eine vereinfachte Herstellung und/oder eine kostengünstige Herstellung ermöglicht werden.

Die obige Aufgabe wird durch eine metallische Bipolarplatte gemäß Anspruch 1 oder ein Verfahren gemäß Anspruch 6 gelöst. Vorteilhafte Weiterbildungen sind Gegenstand der Unteransprüche.

Ein erster Aspekt der vorliegenden Erfindung besteht darin, daß die Beschichtung der Bipolarplatte aus Mₙ₊₁HXₙ besteht, wobei M ein Übergangsmetall ist, H ausgewählt ist aus Cd, Al, Ga, In, Tl, Si, Ge, Dn, Pb, P, As und S und X ausgewählt ist aus Kohlenstoff und Stickstoff und wobei n = 1, 2 oder 3 ist. Vorzugsweise ist M ausgewählt aus Sc, Ti, Zr, Hf, V, Nb, Ta, Cr und Mo. Besonders bevorzugt besteht die Beschichtung zumindest im wesentlichen aus Ti₃SiC₂.

Die vorschlagsgemäße Beschichtung besitzt eine hohe elektrische Leitfähigkeit (annähernd wie Gold) und eine gute Korrosionsbeständigkeit. Weiter ist die Beschichtung kostengünstig herstellbar. Insbesondere ist ein Aufbringen der Beschichtung durch Hochstrom-Impuls-Sputtern oder durch CVD (Chemical Vapor Deposition) möglich. Alternativ ist auch eine elektrochemische Abscheidung der Beschichtung möglich.

Die nanostrukturierte Beschichtung ist vorzugsweise phasenrein, einschichtig, flexibel, (relativ) weich und/oder (hochgradig) dicht.

Die vorschlagsgemäße Beschichtung wird vorzugsweise auf die Bipolarplatte bzw. dessen Plattenmaterial, vorzugsweise Blech, vor dem Umformen aufgebracht. Das beschichtete Plattenmaterial wird dann zur Herstellung der Bipolarplatte in der gewünschten Weise umgeformt, beispielsweise durch Pressen, Tiefziehen oder dergleichen. Dies gestattet eine besonders einfache und damit auch kostengünstige Herstellung, da die einzelnen Bipolarplatten nach der Umformung nicht mehr beschichtet werden müssen.

Insbesondere liegt ein weiterer, auch unabhängig realisierbarer Aspekt der vorliegenden Erfindung darin, die Bipolarplatte - genauer gesagt das metallische Plattenmaterial der Bipolarplatte - zunächst mit einer nanostrukturierten und anorganischen Beschichtung zu versehen und anschließend erst umzuformen, um die Bipolarplatte zu bilden bzw. herzustellen. Entsprechend wird eine einfache und kostengünstige Herstellung ermöglichst.

Weitere Aspekte, Merkmale, Eigenschaften und Vorteile der vorliegenden Erfindung ergeben sich aus den Ansprüchen und der nachfolgenden Beschreibung einer bevorzugten Ausführungsform anhand der Zeichnung. Es zeigt:
- Fig. 1: eine schematische Darstellung einer vorschlagsgemäßen Bipolarplatte;
- Fig. 2: einen ausschnittsweisen, schematischen Schnitt der vorschlagsgemäßen Bipolarplatte; und
- Fig. 3: eine schematische Darstellung einer Brennstoffzellenanordnung mit vorschlagsgemäßen Bipolplatten.

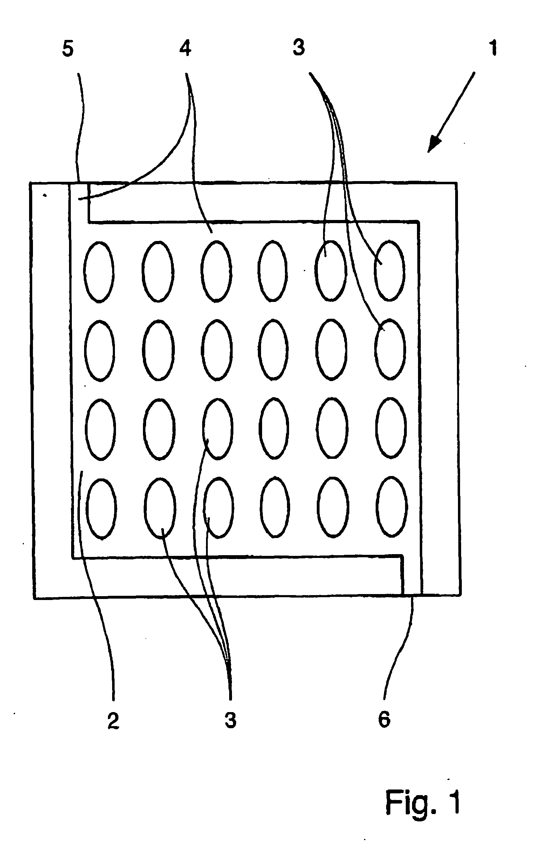

Fig. 1 zeigt in einer sehr schematischen Darstellung eine vorschlagsgemäße Bipolarplatte 1. Die Bipolarplatte 1 weist eine zumindest bereichsweise strukturierte Oberflache 2 insbesondere mit Erhebungen 3 und/oder Vertiefungen bzw. Kanälen 4 oder dergleichen auf. Diese Strukturierung dient insbesondere der Gasführung in einer Brennstoffzelle. Beispielsweise kann Brenngas oder Oxidationsgas von einem Einlaß 5 über ein sogenanntes Strömungsfeld zu einem Auslaß 6 strömen.

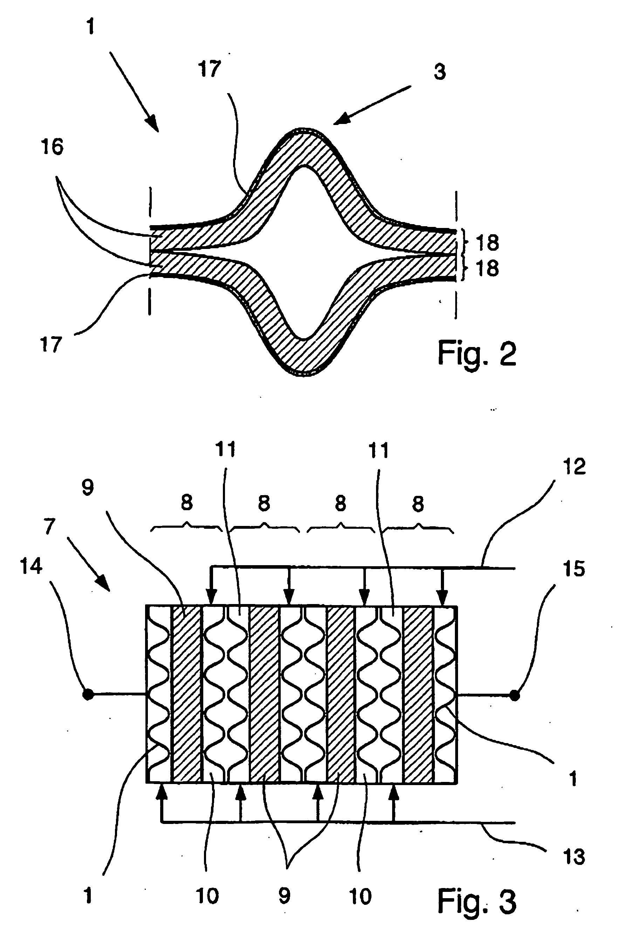

Fig. 2 zeigt in einem ausschnittsweisen, schematischen Schnitt einen Teil der vorschlagsgemäßen Bipolarplatte 1 im Bereich einer Erhebung 3.

Fig. 3 zeigt in einem schematischen, nicht maßstabsgerechten Schnitt eine Brennstoffzellenanordnung 7 mit mehreren als Stapel angeordneten bzw. in Serie geschalteten Brennstoffzellen 8, die jeweils eine vorschlagsgemäße Bipolarplatte 1 als Zellrahmen bzw. zur Abtrennung bzw. zur Bildung von Kathode oder Anode aufweisen. Weiter weisen die Brennstoffzellen 8 vorzugsweise jeweils eine Membran 9 oder dergleichen insbesondere zur Trennung von Gasräumen 10, 11 der jeweiligen Brennstoffzelle 8 auf.

Die Gasräume 10, 11 sind in Fig. 2 nur schematisch angedeutet und insbesondere jeweils von der Bipolarplatte 1 - insbesondere durch die Oberflächenstrukturierung - gebildet oder begrenzt.

In Fig. 3 sind weiter noch schematisch Zuführungen 12 und 13 für Brennstoff bzw. Gas, insbesondere Brenngas und Oxidationsgas, angedeutet.

Die Breimstoffzellenanordnung 7 gibt im Betrieb eine elektrische Energie über Anschlüsse 14 und 15 ab. Alternativ oder zusätzlich können jedoch auch die einzelnen Bipolarplatten 1 über nicht dargestellte elektrische Anschlüsse kontaktiert und/oder - insbesondere bei voneinander getrennten Brennstoffzellen 8 - miteinander verbunden sein.

Die Bipolarplatte 1 ist vorzugsweise aus einem metallischen Plattenmaterial 16 hergestellt bzw. aufgebaut und mit einer Beschichtung 17 versehen, wie in Fig. 2 gezeigt. Besonders bevorzugt ist daraus eine Halbplatte 18 gebildet, die insbesondere mit einer entsprechenden, entgegengesetzten oder komplementären Halbplatte 18 zu einer Bipolarplatte 1 zusammengebaut ist. Jedoch kann auch eine Halbplatte 18 für sich genommen eine Bipolarplatte 1 bilden. Bedarfsweise können die Halbplatten 18 auch beidseitig mit der Beschichtung 17 versehend sein.

Bei dem Plattenmaterial 16 handelt es sich insbesondere um Blech, vorzugsweise aus Stahl, Edelstahl, Titan oder dergleichen.

Es ist vorgesehen, daß die Beschichtung 17 aus Mₙ₊₁HXₙ besteht, wobei M ein Übergangsmetall ist, H ausgewählt ist aus Cd, Al, Ga, In, Tl, Si, Ge, Sn, Pb, P, as und S und X ausgewählt ist aus Kohlenstoff und Stickstoff und wobei n = 1, 2 oder 3. Vorzugsweise ist M ausgewählt aus Sc, Ti, Zr, Hf, V, Nb, Ta, Cr und Mo. Besonders bevorzugt besteht die Beschichtung 17 zumindest im wesentlichen aus Ti₃SiC₂,

Insbesondere die aus Ti₃SiC₂ bestehende Beschichtung 17 hat sich als sehr vorteilhaft erwiesen. Die Analyse der Struktur der Beschichtung 17 ergibt eine selbstorganisierte Schichtstruktur (Nanostrukturierung), bei der eine monoatomare Siliziumschicht mit aus Titan und Kohlenstoffbestehenden Schichten abwechselt. Insbesondere wird eine derartige Schichtung oder eine vergleichbare Schichtung bei der vorliegenden Erfindung als nanostrukturiert verstanden.

Weitere Untersuchungen zeigten, daß die Beschichtung 17 außergewöhnliche chemische, thermische, mechanische und elektrische Eigenschaften ausweist. Insbesondere ist der elektrische Widerstand mit ca. 2•10⁻⁷Ohm·m so niedrig wie bei Metallen. Weiter ist die Oxidationsbeständigkeit und Korrosionsbeständigkeit auch bei hohen Temperaturen ausgezeichnet, insbesondere wie bei Keramiken. Die Nanostrukturierung führt dazu, daß mechanische Schäden - sofern sie überhaupt auftreten - auf kleine Bereiche lokalisiert bleiben und/oder daß sich Risse nicht oder nur begrenzt ausbreiten.

Ein weiterer Vorteil der vorschlagsgemäßen Beschichtung 17 liegt darin, daß diese eine äußerst geringe Porosität bzw. eine große Dichtheit aufweist. Insbesondere ist im Vergleich zu den aus der WO 01/78175 A1 bekannten Schichten bei der vorschlagsgemäßen Beschichtung 17 eine geringere Porosität bei vergleichbarer Schichtdicke bzw. eine geringere Schichtdicke bei vergleichbarer Schutzwirkung erreichbar.

Weiterhin hat sich gezeigt, daß die vorschlagsgemäße Beschichtung ungewöhnlich widerstandfähig gegen thermische Schocks ist.

Ein weiterer Vorteil der vorschlagsgemäßen Beschichtung 17 ist, daß sie zumindest verhältnismäßig flexibel und/oder weich ist.

Besonders bevorzugt wird die Beschichtung 17 vor der Umformung des Plattenmaterials 16 aufgebracht und anschließend zusammen mit dem Plattenmaterial 16 verformt. Dies gestattet eine besonders einfache und kostengünstige Herstellung.

Grundsätzlich kann die Beschichtung 17 jedoch auch erst nach Umformung des Plattenmaterials 16, also nach Formung der Bipolarplatte 2, aufgebracht werden.

Die Dicke der Beschichtung 17 beträgt vorzugsweise höchstens 100 nm, insbesondere höchstens 50 nm.

Es ist anzumerken, daß die vorschlagsgemäße Beschichtung 17 auch bei sonstigen Bipolarplatten 1 und auch bei sonstigen metallischen, elektrisch leitenden Bauteilen, insbesondere einer Brennstoffzelle 2, einsetzbar ist. Insbesondere ist der Begriff "Bipolarplatte" in einem weiten Sinn auch dahingehend zu verstehen, daß auch sonstige metallische, elektrisch leitende Bauteile darunter zu verstehen sind, die umgeformt bzw. verformt werden.

## Patentansprüche

1. Metallische Bipolarplatte (1) für eine Brennstoffzelle (8) mit einer elektrisch leitenden Beschichtung (17),
**dadurch gekennzeichnet,**
**daß** die Beschichtung (17) nanostrukturiert ist und aus Mₙ₊₁HXₙ besteht, wobei M ein Übergangsmetall ist, H ausgewählt ist aus Cd, Al, Ga, In, Tl, Si, Ge, Sn, Pb, P, As und S und X ausgewählt ist aus Kohlenstoff und Stickstoff und wobei n = 1, 2 oder 3.

2. Bipolarplatte nach Anspruch 1, **dadurch gekennzeichnet, daß** die Beschichtung (17) einschichtig ist.

3. Bipolarplatte nach einem der voranstehenden Ansprüche, **dadurch gekennzeichnet, daß** die Bipolarplatte (1) mit der aufgebrachten Beschichtung (17) umgeformt ist.

4. Bipolarplatte nach einem der voranstehenden Ansprüche, **dadurch gekennzeichnet, daß** M ausgewählt ist aus Sc, Ti, Zr, Hf, V, Nb, Ta, Cr und Mo.

5. Bipolarplatte nach einem der voranstehenden Ansprüche, **dadurch gekennzeichnet, daß** die Beschichtung (17) zumindest im wesentlichen aus Ti₃SiC₂ besteht.

6. Verfahren zur Herstellung einer metallischen Bipolarplatte (1) aus einem metallischen Plattenmaterial (16), das mit einer elektrisch leitenden Beschichtung (17) versehen wird, für eine Brennstoffzelle (8),
**dadurch gekennzeichnet,**
**daß** das Plattenmaterial (16) zunächst mit einer nanostrukturierten, anorganischen Beschichtung (17), die aus Mₙ₊₁HXₙ besteht, wobei M ein Übergangsmetall ist, H ausgewählt ist aus Cd, AL, Ga, In, Tl, Si, Ge, Sn, Pb, P, As und S und X ausgewählt ist aus Kohlenstoff und Stickstoff und wobei n = 1, 2 oder 3 ist, versehen und anschließend umgeformt wird.

7. Verfahren nach Anspruch 6, **dadurch gekennzeichent, daß** die Bipolarplatte (1) gemäß einem der Ansprüche 1 bis 5 ausgebildet wird.

## Claims

1. Metallic bipolar plate (1) for a fuel cell (8) with an electrically conductive coating (17),
**characterized in**
**that** the coating (17) is nanostructured and consists of Mₙ₊₁HXₙ, wherein M is a transition metal, H is selected from Cd, Al, Ga, In, Tl, Si, Ge, Sn, Pb, P, As and S and X is selected from carbon and nitrogen and wherein n = 1, 2 or 3.

2. Bipolar plate according to claim 1, **characterized in that** the coating (17) is single layered.

3. Bipolar plate according to one of the foregoing claims, **charactrized in that** the bipolar plate (1) with the applied coating (17) is formed.

4. Bipolar plate according to one of the foregoing claims, **characterized in that** M is selected from Sc, Ti, Zr, Hf, V, Nb, Ta, Cr and Mo.

5. Bipolar plate according to one of the foregoing claims, **characterized in that** the coating (17) consists at least essentially of Ti₃SiC₂.

6. Method for producing a metallic bipolar plate (1) of a metallic plate material (16), that is provided with an electrically conductive coating (17), for a fuel cell (8),
**characterized in**
**that** the plate material (16) is initially provided with a nanostructured, anorganic coating (17), which consists of Mₙ₊₁HXᵤ wherein M is a transition metal, H is selected from Cd, Al, Ga, In, Tl, Si, Ge, Sn, Pb, P, As and S and X is selected from carbon and nitrogen and wherein n = 1, 2 or 3, and is afterwards formed.

7. Method according to claim 6, **characterized in that** the bipolar plate (1) is designed according to one of the claims 1 to 5.

## Revendications

1. Plaque métallique bipolaire (1) pour une pile à combustible (8) avec un revêtement conducteur de l'électricité (17),
**caractérisée en ce que**
le revêtement (17) est nanostructuré et consiste en Mₙ₊₁HXₙ, sachant que M est un métal de transition, que H est choisi parmi les éléments Cd, Al, Ga, In, TI, Si, Ge, Sn, Pb, P, As et S, et que X est choisi parmi le carbone et l'azote, et n = 1, 2 ou 3.

2. Plaque bipolaire selon la revendication 1, **caractérisée en ce que** le revêtement (17) est monocouche.

3. Plaque bipolaire selon l'une quelconque des revendications précédentes, **caractérisée en ce que** la plaque bipolaire (1) est façonnée avec le revêtement (17) appliqué dessus.

4. Plaque bipolaire selon l'une quelconque des revendications précédentes, **caractérisée en ce que** M est choisi parmi le Sc, le Ti, le Zr, le Hf, le V, le Nb, le Ta, le Cr et le Mo.

5. Plaque bipolaire selon l'une quelconque des revendications précédentes, **caractérisée en ce que** le revêtement (17) consiste au moins pour l'essentiel en Ti₃SiC₂.

6. Procédé de fabrication d'une plaque métallique bipolaire (1) en un matériau de plaque métallique (16), qui est doté d'un revêtement électriquement conducteur (17), pour une pile à combustible (8).
**caractérisé en ce que**
le matériau de la plaque (16) est d'abord doté d'un revêtement (17) nanostructuré inorganique qui consiste en Mₙ₊₁HXₙ, sachant que M est un métal de transition, que H est choisi parmi les éléments Cd, Al, Ga, In, TI, Si, Ge, Sn, Pb, P, As et S, et que X est choisi parmi le carbone et l'azote, et avec n = 1, 2 ou 3, et est ensuite façonné.

7. Procédé selon la revendication 6, **caractérisé en ce que** la plaque bipolaire (1) est formée selon l'une quelconque des revendications 1 à 5.
